# EUROPÄISCHE PATENTANMELDUNG

(11) **EP 1 000 679 A2**
(43) Veröffentlichungstag der Anmeldung: **17.05.2000**
(21) Anmeldenummer: 99250300.3
(22) Anmeldetag: 01.09.1999
(51) Int. Cl.: B21D 39/04

(54) **Verfahren zum Verbinden eines Rohres mit einem Fitting sowie Kombination aus Fitting, Rohr und Pressgerät zur Durchführung des Verfahrens**

(30) Priorität: 13.11.1998 DE 19854044
(71) Anmelder: MANNESMANN Aktiengesellschaft, 40213 Düsseldorf (DE)
(72) Erfinder: Sedlak, Bernd, 45478 Mülheim (DE); Schurr, Johannes, 53227 Bonn (DE)
(74) Vertreter: Meissner, Peter E., Dipl.-Ing.

(57) **Zusammenfassung**

Die Erfindung betrifft ein Verfahren zum Verbinden eines glattendigen Rohres mit einem Fitting, bei dem zur Herstellung der Verbindung Fitting und Rohr ineinandergeschoben und in zwei Ebenen Fitting und Rohr radial nach innen verpreßt werden, wobei in einer Ebene die erforderliche Abdichtung und in der zweiten Ebene die erforderliche axiale Fixierung erzeugt wird. Die Erfindung ist dadurch gekennzeichnet, daß die Verpressung in den zwei Ebenen ausgehend vom gleichen Startzeitpunkt mit unterschiedlichen Geschwindigkeiten erfolgt und die Verpressung zum gleichen Endzeitpunkt abgeschlossen ist.
Die Erfindung betrifft auch eine Kombination aus Fitting, Rohr und Preßgerät zur Durch-führung des Verfahrens mit einer die zu verbindenden Teile umgreifenden Zange mit wenigstens zwei darin angeordneten Preßbacken, die innenseitig eine Preßkontur aufweisen und im geschlossenen Zustand einen Preßraum bilden, wobei die jeweilige Preßbacke längsgeteilt ist und die radiale Verschiebbarkeit der beiden Teilbacken (4,5) kinematisch gekoppelt ist und zwar so, daß Startzeitpunkt und Verpressungsende für beide Teilbacken (4,5) gleich ist.

## Beschreibung

Die Erfindung betrifft ein Verfahren zum Verbinden eines glattendigen Rohres mit einem Fitting gemäß dem Oberbegriff des Patentanspruches 1.

Das Preßfitting-System für die Hausinstallation aus C-Stahl (Kohlenstoffstahl) oder hochlegiertem Stahl ist bekannt (siehe Prospekt der Mannesmann Presefitting GmbH, Mannesmann Pressfitting-System / Sanitär, Ausgabe 8/94 und Mannesmann Pressfitting-System / Heizung, Ausgabe 11/94 oder DE-OS 27 25 280). Dieses System besteht im wesentlichen aus einem verformbaren Preßfitting, der je nach Ausbildung als Bogen oder T-Stück oder Muffe oder Übergangsstück mindestens ein hakenförmig und wulstartig ausgebildetes, einen Dichtring aufnehmendes Ende aufweist und daran sich ein in Längsrichtung erstreckender zylindrischer Bereich anschließt. Am Ende der Erstreckung dieses zylindrischen Bereiches ist eine radial nach innen sich erstreckende sickenförmige Vertiefung angepreßt, die als Anschlag für das einschiebbare glattendige Rohr dient. Mittels eines Preßgerätes, das mindestens zwei darin angeordnete Preßbacken aufweist, wird das wulstartige Ende plastisch und der eingeschlossene Dichtring elastisch verformt. Zusätzlich wird mit dem gleichen Preßvorgang im zylindrischen Bereich des Fittings eine Vertiefung angepreßt, die auch das darunter liegende eingeschobene Rohr miterfaßt. Die Verpressung in der Ebene des Dichtringes bildet die Abdichtung und die angepreßte sickenförmige Vertiefung im zylindrischen Bereich die axiale Fixierung des Systems zur Aufnahme der durch den Innendruck sich einstellenden Längskräfte.

Nachteilig bei diesem System ist zum einen die komplizierte und schwer herstellbare Längskontur des Fittings und die nicht optimierte Einpreßtiefe für den Bereich der Abdichtung und der axialen Fixierung.

Aufgabe der Erfindung ist es, ein Verfahren zum Verbinden eines Rohres mit einem Fitting anzugeben, mit dem optimal im Bereich der Abdichtung und der axialen Fixierung verpreßt werden und bei dem ein einfach herzustellender Fitting Verwendung finden kann.

Diese Aufgabe wird ausgehend vom Oberbegriff in Verbindung mit den kennzeichnenden Merkmalen des Patentanspruches 1 gelöst. Vorteilhafte Weiterbildungen sowie eine Kombination aus Fitting, Rohr und Preßgerät sind Gegenstand von Unteransprüchen.

Nach der Lehre der Erfindung unterscheidet sich das vorgeschlagene Verfahren vom bekannten Stand der Technik dadurch, daß die Verpressung in den zwei Ebenen ausgehend vom gleichen Startzeitpunkt mit unterschiedlichen Geschwindigkeiten erfolgt und die Verpressung zum gleichen Endzeitpunkt abschließt. Als besonders vorteilhaft hat sich herausgestellt, wenn die Verpressung in der Ebene zur Erzeugung der axialen Fixierung schneller erfolgt als in der anderen Ebene. Mit dieser Verfahrensweise wird ein Kippen vermieden und die Ebene zur Erzeugung der Abdichtung wird weniger zusammengepreßt als die Ebene zur Erzeugung der axialen Fixierung. Das führt insgesamt zu einer optimalen Verpressung, so daß auch das Preßgerät entsprechend vorteilhaft ausgelegt werden kann. Das Verfahren ist anwendbar für eine direkte Verpressung von Fitting und Rohr, ist aber auch geeignet für eine Verbindung, bei der zwischen Rohr und Fitting ein Dichtelement angeordnet ist. Das Fitting kann in einfacher Weise als Hülse ausgebildet sein, wobei der nach außen und / oder nach innen sich erstreckende Steg als Anschlag für das ein- bzw. aufzuschiebende Rohr dient. Für eine Teilbacke der Preßzange dient der Steg als Positionierung, so daß ein seitliches Verrutschen nicht möglich ist. Bei der direkten Verpressung von Fitting und Rohr hat es sich als vorteilhaft herausgestellt, wenn in der Ebene, die die Abdichtung erzeugt, ein nach außen oder nach innen sich erstreckender noppenförmiger Ring angeordnet wird. Das zwingt das zu verpressende Material, darüber hinwegzufließen und somit eine Abdichtstelle zu bilden. Im Falle, daß Fitting und Rohr aus Metall sind, spricht man dann von einer metallischen Dichtung.

In der Zeichnung wird anhand einiger Ausführungsbeispiele die erfindungsgemäß ausgebildete Kombination von Fitting, Rohr und Preßgerät dargestellt. Es zeigen:
- Figur 1: in einem Längsschnitt ein erstes Ausführungsbeispiel der erfindungsgemäß ausgebildeten Kombination einschließlich einer Ausschnittvergrößerung
- Figur 2: eine Variante der Ausführungsform in Figur 1 einschließlich einer Ausschnittvergrößerung
- Figur 3: ein zweites Ausführungsbeispiel einschließlich einer Ausschnittvergrößerung
- Figur 4: ein drittes Ausführungsbeispiel einschließlich einer Ausschnittvergrößerung

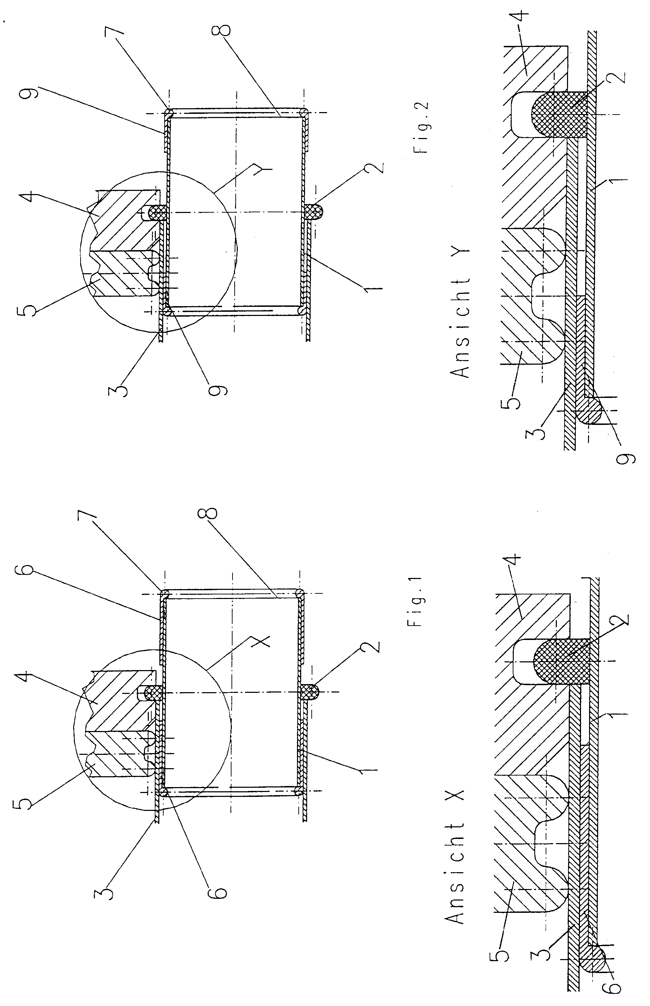

In Figur 1 ist in einem Längsschnitt ein erstes Ausführungsbeispiel der erfindungsgemäß ausgebildeten Kombination von Fitting, Rohr und Preßgerät dargestellt. Das Fitting 1 ist in einfacher Weise als zylindrische Hülse ausgebildet und weist im mittleren Bereich einen nach außen sich erstreckenden ringförmigen Steg 2 auf. Dieser dient zum einen als Längsanschlag für das auf das Fitting 1 aufgeschobene und mit dem Fitting 1 zu verbindende Rohr 3. Erfindungsgemäß ist die Preßbacke des Preßgerätes (hier nicht dargestellt) längsgeteilt und weist zwei Teilbacken 4, 5 auf. Beide Teilbacken 4, 5 sind kinematisch miteinander gekoppelt, so daß bei gleichem Startzeitpunkt, aber unterschiedlichen Geschwindigkeiten das Ende der Verpressung gleichzeitig erreicht wird. In diesem Ausführungsbeispiel ist zwischen Fitting 1 und Rohr 3 ein flaches, langgestrecktes Dichtelement 6 angeordnet. Dieses ist so ausgebildet, daß es an einem Ende einen Kragen 7 aufweist, der an der Stirnseite 8 des Fittings 1 zur Anlage kommt. Mit der am Steg 2 positionierten Teilbacke 4 wird die axiale Fixierung erzeugt und mit der anderen Teilbacke 5 die Abdichtung. Die kinematische Kopplung zwischen den beiden Teilbacken 4, 5 ist so gewählt, daß die rechte Teilbacke 4 mit einer höheren Geschwindigkeit verfahren wird im Vergleich zur anderen Teilbacke 5. Das führt in Konsequenz dazu, daß die Einpreßtiefe im Bereich der axialen Fixierung größer ist als im Bereich der Abdichtung.

Figur 2 zeigt eine Variante von Figur 1, wobei für gleiche Teile gleiche Bezugszeichen gewählt worden sind. In diesem Ausführungsbeispiel ist die Länge des Dichtelementes 9 so gewählt, daß im Bereich der Abdichtung eine direkte Abdichtung zwischen Fitting 1 und Rohr 3, als auch eine Abdichtung über das Dichtelement 9 erzeugt wird. Der Bereich der Erzeugung der axialen Fixierung bleibt davon unberührt.

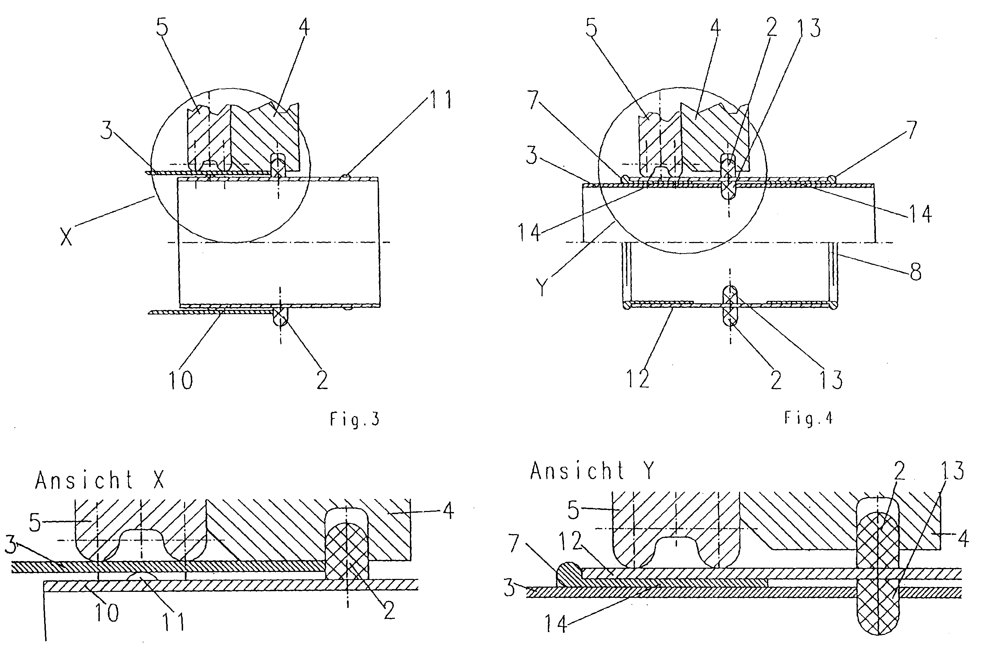

In Figur 3 ist ein zweites Ausführungsbeispiel dargestellt. Es unterscheidet sich von dem in Figur 1 und 2 dargestellten Ausführungsbeispiel dadurch, daß zwischen Fitting 10 und Rohr 3 kein Dichtelement angeordnet ist. Dafür weist das Fitting 10 auf der Außenseite im Bereich der Erzeugung der Abdichtung einen noppenförmigen Ring 11 auf. Dadurch wird erreicht, daß beim Verpressen der entsprechende Bereich des Rohres 3 über den Ring 11 gezogen wird. Im Falle einer Kombination von Fitting 10 und Rohr 3 aus Metall spricht man dann von einer metallischen Dichtung. Die übrigen Aspekte sind gleich, so daß sich eine Wiederholung erübrigt.

Figur 4 zeigt ein drittes Ausführungsbeispiel, wobei dies quasi die Umkehrung des in Figur 1 dargestellten Ausführungsbeispieles ist. Im Unterschied zu Figur 1 wird das Rohr 3 in das Fitting 12 eingeschoben, wobei zwischen Rohr 3 und Fitting 12 ein Dichtelement 14 angeordnet ist. Dieses weist ebenfalls einen Kragen 7 auf, der an der Stirnseite 8 des Fittings 12 zur Anlage kommt. Als Anschlag für das in den Fitting 12 einzuschiebende Rohr 3 ist auf der Innenseite des Fittings 12 ein ringförmiger Steg 13 vorgesehen. Alle übrigen Punkte, insbesondere wie längsgeteilte Preßbacken sind gleich, nur daß die beiden Teilbacken 4, 5 auf den Fitting 12 drücken, um ihn mit dem eingeschobenen Rohr 3 zu verbinden.

## Patentansprüche

1. Verfahren zum Verbinden eines glattendigen Rohres mit einem Fitting, bei dem zur Herstellung der Verbindung Fitting und Rohr ineinandergeschoben und in zwei Ebenen Fitting und Rohr radial nach innen verpreßt werden, wobei in einer Ebene die erforderliche Abdichtung und in der zweiten Ebene die erforderliche axiale Fixierung erzeugt wird,
dadurch gekennzeichnet,
daß die Verpressung in den zwei Ebenen ausgehend vom gleichen Startzeitpunkt mit unterschiedlichen Geschwindigkeiten erfolgt und die Verpressung zum gleichen Endzeitpunkt abgeschlossen ist.

2. Verfahren nach Anspruch 1,
dadurch gekennzeichnet,
daß die Verpressung in der Ebene zur Erzeugung der axialen Fixierung schneller erfolgt als zur Erzeugung der Abdichtung.

3. Kombination aus Fitting, Rohr und Preßgerät zur Durchführung des Verfahrens nach Anspruch 1 mit einem Fitting und wenigstens einem damit verbindbaren Rohr und einem die zu verbindenden Teile umgreifenden Zange mit wenigstens zwei darin angeordneten Preßbacken, die innenseitig eine Preßkontur aufweisen und im geschlossenen Zustand einen Preßraum bilden,
dadurch gekennzeichnet,
daß die jeweilige Preßbacke längsgeteilt ist und die radiale Verschiebbarkeit der beiden Teilbacken (4,5) kinematisch gekoppelt ist und zwar so, daß Startzeitpunkt und Verpressungsende für beide Teilbacken (4,5) gleich sind.

4. Kombination nach Anspruch 3,
dadurch gekennzeichnet,
daß das Fitting (1,10,12) als Hülse ausgebildet ist mit einem nach außen und / oder nach innen sich erstreckenden Steg (2,13), der für das ein- oder aufzuschiebende Rohr (3) einen Anschlag und für eine Teilbacke (4) der Preßzange eine Positionierung bildet.

5. Kombination nach Anspruch 4,
dadurch gekennzeichnet,
daß zwischen Rohr (3) und Fitting (1,12) ein flaches langgestrecktes Dichtelement (6,9,14) angeordnet ist.

6. Kombination nach Anspruch 4 und 5,
dadurch gekennzeichnet,
daß die Länge des Dichtelementes (6) gleich / größer ist als die Breite der einen die Abdichtung erzeugenden Teilbacke (5).

7. Kombination nach Anspruch 4,
dadurch gekennzeichnet,
daß die Länge des Dichtelementes (9) gleich / kleiner ist als die halbe Breite der einen die Abdichtung erzeugenden Teilbacke (5).

8. Kombination nach Anspruch 4,
dadurch gekennzeichnet,
daß das Fitting (10) in dem die Abdichtung erzeugenden Bereich mit einem nach außen oder nach innen sich erstreckenden noppenförmigen Ring (11) versehen ist.
